# FASCICULE DE BREVET EUROPEEN

(11) **EP 1 927 495 B1**
(45) Date de publication et mention de la délivrance du brevet: **28.07.2010**
(21) Numéro de dépôt: 07121697.2
(22) Date de dépôt: 27.11.2007
(51) Int. Cl.: B60J 10/02, B60J 10/00

(54) **Dispositif de fixation de vitrages fixes sur des véhicules de transport de passagers et procédé d'utilisation.**
Vorrichtung zur Befestigung von festen Scheiben an Passagierfahrzeugen
Device for attaching fixed windows to passenger transport vehicles and method of using same.

(30) Priorité: 28.11.2006 FR 0610395
(43) Date de publication de la demande: 04.06.2008
(73) Titulaire: Barat Transport, 02500 Hirson (FR)
(72) Inventeur: Provost, Christian, 41700 Couddes (FR)
(74) Mandataire: Peaucelle, Chantal

(56) Documents cités:
- WO-A-96/08387
- DE-A1- 2 228 869
- DE-A1- 3 414 394
- FR-A1- 2 133 575

## Description

La présente invention concerne un dispositif pour la fixation de vitrages sur des véhicules de transport de passagers.

En particulier, un dispositif selon l'invention est du type comprenant un vitrage, un joint destiné à venir au contact dudit vitrage et un encadrement destiné à recevoir et bloquer le joint.

Dans le domaine des véhicules et en particulier des véhicules de transport de passagers, notamment ferroviaire ou par autocar, la disposition des vitrages sur les ouvertures destinées à permettre la visualisation extérieure s'avère délicate et bien souvent onéreuse.

En effet, la plupart des systèmes proposés comprennent un encadrement, généralement métallique, qui vient finir l'ouverture de manière à en éliminer les arêtes vives et préparer la pose d'un joint d'étanchéité entre le vitrage et l'encadrement.

Le plus souvent, on prévoit simplement un encadrement sur lequel on vient coller ledit joint et la dite fenêtre. L'ensemble formé est esthétique mais révèle quelques inconvénients notables.

En particulier, l'emploi de colle pour unir les différents éléments constitutifs de ces dispositifs empêche presque toujours le changement simple, rapide et efficace du joint si celui est détérioré par les intempéries ou tout simplement au terme de la durée de vie du polymère plastique qui le constitue.

On est alors obligé d'immobiliser le véhicule pour procéder au retrait de l'ensemble du dispositif et notamment du vitrage.

Dans ce cas, il devient difficile de retirer le joint du vitrage et de pouvoir facilement recycler la vitre.

En général, la vitre doit être brisée.

Par ailleurs, dans le cas de dégradation des vitrages, notamment lors de projections de cailloux non retenus par l'enrobage routier ou lors d'accident, il est quasiment impossible de retirer rapidement les morceaux du vitrage resté en place, en particulier sur le pourtour du joint.

Il faut également procéder à une immobilisation longue du véhicule pour pouvoir retirer l'intégralité du joint et des morceaux de verre qui y sont retenus.

FR 2133575 se rapporte à une bande profilée pour la fixation en particulier de pare-brise sur les automobiles, avec deux rainures orientées an sens opposé et décalées l'une par rapport à l'autre destinées à recevoir les arêtes de la glace et le rebord du châssis de glace.

DE 2228869 décrit un joint d'étanchéité et de fixation, en matière élastique, pour le montage en particulier d'un pare brise dans un véhicule à moteur, comprenant une rainure pour loger le vitre, celle-ci devant être placée dans le cadre sur le côté de la nervure opposé à l'habitacle du véhicule, et une lèvre de maintien, qui doit être tirée par-dessus la nervure.

Les inventeurs ont mis au point, ce qui fait l'objet de l'invention, un dispositif tel que présenté permettant d'éviter la plupart de ces inconvénients et notamment l'immobilisation prolongée du véhicule et un recyclage de l'un au moins du joint ou du vitrage.

Un dispositif selon l'invention a une structure telle que :
- l'encadrement comporte une ouverture destinée à recevoir ledit joint dont le volume est supérieur à celui dudit joint pour ménager un vide sous le joint une fois le joint disposée dans l'ouverture,
- le joint est creux dans sa base destinée à être disposée dans l'ouverture de l'encadrement et comporte à son extrémité libre opposée à ladite base une zone centrale évidée en forme de U pour venir épouser, enserrer et bloquer la périphérie dudit vitrage, et
- l'ouverture de l'encadrement et le joint possèdent chacun un profil complémentaire pour que le joint puisse s'enchâsser et se bloquer dans l'ouverture.

Le dispositif selon l'invention se **caractérise en ce que** :
- l'encadrement possède au moins une première paroi latérale débordante dont l'extrémité est pourvue d'un ergot, une paroi disposée à distance de l'ergot d'extrémité, s'étendant orthogonalement à la paroi latérale du même côté de la paroi que ledit ergot et portant une seconde paroi latérale en vis-à-vis de la première paroi latérale, ladite seconde paroi latérale portant une paroi oblique inclinée vers la première paroi latérale, ladite paroi oblique comportant un bossage, la disposition des parois formant ladite ouverture destinée à recevoir et bloquer ledit joint, et
- ladite zone centrale évidée en forme de U comporte au moins une aile interne et une aile externe destinées à venir encadrer la périphérie dudit vitrage, ledit joint comportant à sa base, sur sa face correspondant à l'aile externe, une gorge destinée à coopérer avec l'ergot de l'encadrement et, sur sa face correspondant à l'aile interne, un talon destiné à coopérer avec le bossage de l'ouverture de l'encadrement.

Plus particulièrement, le joint comporte de plus, du côté d'extérieur de l'aile extrême 10 , une saignée pratiquée sur toute la longueur dudit joint disposée à distance de ladite gorge.

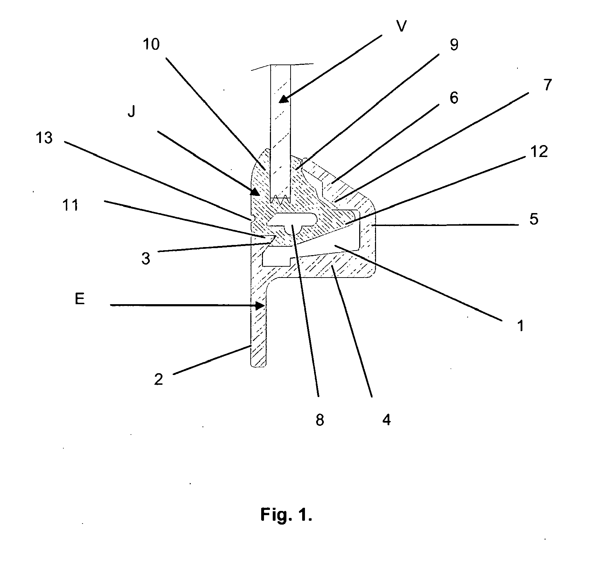

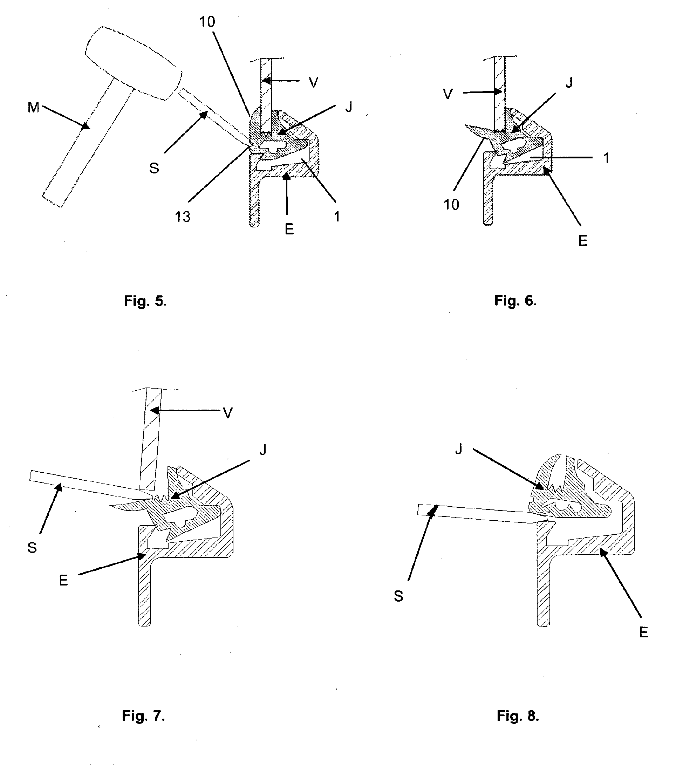

Plus particulièrement dans cette variante, adite ouverture de l'encadrement est prévue pour recevoir le joint dans sa position normale correspondant à la position du joint représenté dans les figures 1 et 5 et dans une position plus enfoncée où la saignée du joint se loge sur l'ergot dans l'encadrement.

Préférentiellement, ledit joint est réalisé en un élastomère extrudé.

En particulier, ledit élastomère extrudé est choisi parmi l'EPDM, le polychloroprène ou le silicone.

De préférence, ledit encadrement est un profilé en aluminium.

L'invention vise également un procédé pour monter un vitrage sur une ouverture de véhicule de transport de passager utilisant le dispositif selon l'invention.

Ce procédé se caractérise en ce que :
- on dispose le vitrage dans la zone centrale évidée en forme de U correspondant dudit joint, ledit joint étant positionné sur toute la périphérie dudit vitrage,
- on enduit d'un produit glissant le joint et/ou ledit encadrement,
- on positionne l'ensemble formé par ledit joint et ledit vitrage face à l'ouverture de l'encadrement,
- on exerce une pression sur ledit ensemble de manière à écraser le joint par déformation du creux de manière à pouvoir permettre le passage du joint dans l'ouverture de l'encadrement jusqu'à la mise en place du joint dans l'ouverture de l'encadrement, et
- on vérifie le positionnement de l'ensemble joint / vitrage dans l'ouverture.

Plus particulièrement, le produit glissant est de l'eau savonneuse.

L'invention vise enfin un procédé pour démonter un vitrage sur une ouverture de véhicule de transport de passager utilisant le dispositif selon l'invention.

Ce procédé se caractérise en ce que :
- on ouvre vers l'extérieur le U de la zone centrale dudit joint en enfonçant le joint vers l'intérieur du profil dans le vide ménagé sous celui-ci, et
- on retire le vitrage progressivement tout autour de l'ouverture.

De préférence, le procédé selon l'invention comprend de plus le retrait, si nécessaire, dudit joint.

Dans la mise en oeuvre particulière du dispositif présentée ci-avant, l'ouverture de la zone centrale dudit joint est obtenue en faisant basculer l'aile externe dudit joint.

En particulier dans ce cas, le basculement de l'aile externe dudit joint est obtenu en disposant dans la saignée dudit joint une spatule sur laquelle on frappe, par exemple à l'aide d'un maillet, l'opération étant répétée sur au moins 75 % de la périphérie dudit joint.

L'invention sera mieux comprise à la lecture de la description faite ci après en référence aux dessins annexés sur lesquels :
- La figure 1 représente une vue en coupe de l'ensemble monté des éléments constitutifs du dispositif selon l'invention dans un mode de réalisation préférentiel,
- Les figures 2 à 4 représentent les étapes du procédé de montage du dispositif de la figure 1,
- Les figures 5 à 7 représentent les étapes du procédé de démontage du dispositif de la figure 1, et
- La figure 8 représente le démontage du joint du dispositif de la figure 1 une fois le vitrage retiré.

Sur la figure1 est représenté un dispositif pour le montage, le démontage et la fixation de vitrages sur des véhicules de transport de passagers selon l'invention.

Ce dispositif comprend un vitrage V, un joint J destiné à venir au contact dudit vitrage V et à assurer l'étanchéité du montage et un encadrement E destiné à recevoir et bloquer le joint V

Dans la représentation de la figure 1, l'encadrement E du dispositif comporte une ouverture destinée à recevoir ledit joint J.

Comme cela est clairement illustré, le volume de l'ouverture est supérieur à celui dudit joint J de manière à ménager un vide 1 entre le joint et les parois de l'encadrement E une fois le joint J disposé dans l'ouverture.

Dans la mise en oeuvre particulière telle que représentée, l'encadrement E possède au moins une première paroi latérale débordante 2 dont l'extrémité est pourvue d'un ergot 3, une paroi 4 disposée à distance de l'ergot 3 d'extrémité, s'étendant orthogonalement à la paroi latérale 2 du même côté de la paroi 2 que ledit ergot 3 et portant une seconde paroi latérale 5 en vis-à-vis de la première paroi latérale 2, ladite seconde paroi latérale 5 portant une paroi oblique 6 inclinée vers la première paroi latérale 1.

La paroi oblique 6 comporte un bossage 7.

Comme représenté et mentionné ci-avant, la disposition des parois forme ladite ouverture destinée à recevoir et bloquer ledit joint J.

Le joint est creux 8 dans sa base destinée à être disposée dans l'ouverture de l'encadrement et comporte à son extrémité libre opposée à ladite base une zone centrale évidée en forme de U pour venir épouser, enserrer et bloquer la périphérie dudit vitrage V.

Dans la mise en oeuvre particulière telle que représentée, ladite zone centrale évidée en forme de U comporte au moins une aile interne 9 et une aile externe 10 destinées à venir encadrer la périphérie du vitrage V.

Le joint J comporte également à sa base, sur sa face correspondant à l'aile externe 10, une gorge 11 destinée à coopérer avec l'ergot 3 de l'encadrement E.

Le joint J comporte enfin, sur sa face correspondant à l'aile interne 9, un talon 12 destiné à coopérer avec le bossage 7 de l'ouverture de l'encadrement E.

Ainsi, l'ouverture de l'encadrement E et le joint J possèdent chacun un profil complémentaire pour que le joint J puis s'enchâsser et se bloquer dans l'ouverture.

Par ailleurs, le joint J comporte de plus, du côté extérieur de l'aile, externe 10 , une saignée 13 pratiquée sur toute la longueur dudit joint disposée à distance de ladite gorge 11.

Comme cela est bien visible, l'ouverture de l'encadrement (E) est prévue pour recevoir le joint (J) dans sa position normale correspondant à la position du joint représenté dans les figures 1 et 5 et dans une position plus enfoncée où la saignée (13) du joint (J) se loge sur l'ergot (3) dans l'encadrement (E).

L'utilité de cette saignée 13 sera mieux comprise par la suite notamment à l'appui des figures présentant les étapes du démontage du dispositif.

Bien entendu, de manière connue d'un homme du métier, le joint J est réalisé en un élastomère extrudé qui devra être résistant et posséder une souplesse suffisante.

Parmi les élastomères extrudés, on choisira de préférence, l'EPDM, le polychloroprène ou le silicone.

L'encadrement E, lui, est généralement un profilé en aluminium.

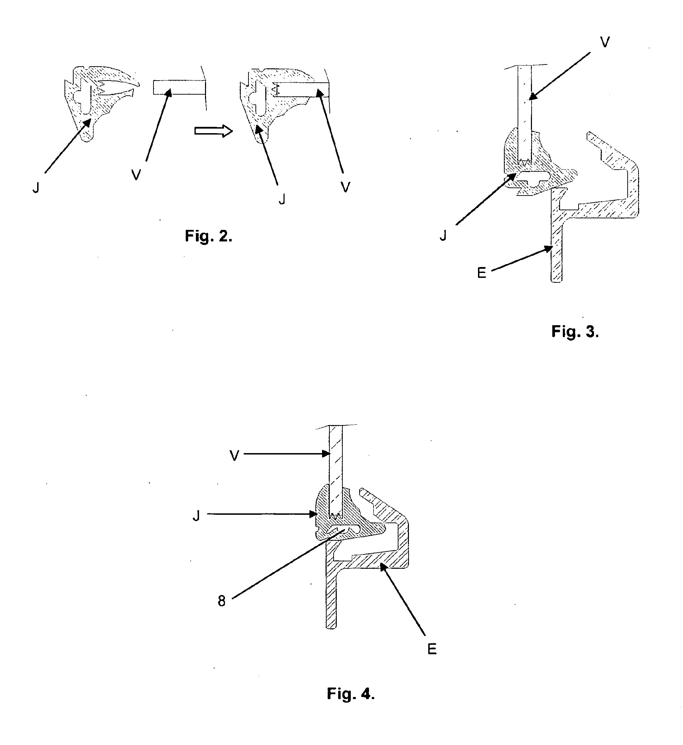

Pour le montage du dispositif selon l' invention, on effectue les opérations suivantes :
1 - on dispose le vitrage V dans la zone centrale évidée en forme de U correspondant du joint J (figure 2).
   Bien entendu, le joint J est positionné sur toute la périphérie du vitrage V.
2 - on enduit d'un produit glissant le joint J et/ou ledit encadrement E de manière à ce que le joint puisse glisser plus facilement sur les arêtes de l'encadrement que du simple fait de ses qualités plastiques naturelle. On choisira de préférence, à titre de produit glissant, de l'eau savonneuse. Dans ce domaine technique particulier, les graisses sous toute leur forme sont à proscrire.
3 - on positionne l'ensemble formé par le joint J et le vitrage V face à l'ouverture de l'encadrement E (figure 3).
4 - on exerce une pression sur l'ensemble de manière à écraser le joint J par déformation du creux 8 (figure 4) de manière à pouvoir permettre le passage du joint J dans l'ouverture de l'encadrement E jusqu'à la mise en place du joint J dans l'ouverture de l'encadrement E.
5 - on vérifie le positionnement de l'ensemble joint J / vitrage V dans l'ouverture.

Pour le démontage du dispositif selon l'invention, on effectuera les opérations suivantes :
1 - on ouvre vers l'extérieur le U de la zone centrale dudit joint J en enfonçant le joint vers l'intérieur de l'encadrement (figure 6). Dans le cas de la mise en oeuvre telle que présentée, l'ouverture de la zone centrale du joint J est obtenue en faisant basculer l'aile externe 10 du joint J. Comme présenté à la figure 5, le basculement de l'aile externe 10 du joint J est obtenu en disposant dans la saignée 13 du joint J une spatule S sur laquelle on frappe, par exemple à l'aide d'un maillet M. On pourra répéter cette étape sur au moins 75 % de la périphérie du joint J. Par exemple, dans le cadre d'un vitrage de forme rectangulaire ou carré, le basculement sur trois côtés du rectangle permettra de pouvoir ensuite déloger le vitrage V de la zone en U du joint J. L'utilité du vide 1 ménagé sous le joint J entre le joint J et la paroi de fond 4 de l'ouverture de l'encadrement E est ici manifeste pour permettre le basculement vers l'intérieur de l'ouverture du joint J et ainsi l'ouverture vers l'extérieur de la zone centrale en U.
2 - on retire le vitrage V progressivement tout autour de l'ouverture (figure 7). Dans cette étape, par exemple, on pourra utiliser la même spatule S pour faire levier sous le vitrage V de manière à le retirer de la zone centrale en U du joint J. Un simple mouvement de type « démonte pneu » suffira pour y parvenir.

Enfin, on pourra de la même manière retirer le joint J, si nécessaire de l'ouverture de l'encadrement E. Ici encore, on utilise la spatule S pour faire levier et déloger le joint J de l'ouverture de l'encadrement E en utilisant encore le même mouvement de type « démonte pneu ».

Le dispositif selon l'invention permet donc de pouvoir démonter l'un ou l'autre du vitrage ou du joint sans qu'il soit nécessaire de briser la vitre ou de détériorer le joint.

L'élément qui reste intact pourra être réutilisé.

Par ailleurs, une simple intervention depuis l'extérieur est nécessaire et ne nécessite qu'une dizaine de minutes pour parvenir à retirer l'ensemble vitrage / joint de l'ouverture de l'encadrement.

Enfin, le dispositif selon l'invention permet le montage d'un vitrage dans un joint vers l'encadrement sans aucun apport de matériau complémentaire (colle, joint, matériau de blocage...).

Le vitrage est donc directement verrouillé physiquement sur l'encadrement par l'intermédiaire du joint.

Le montage du vitrage devient donc un montage automatique.

## Revendications

1. Dispositif de fixation de vitrages sur des véhicules de transport de passagers comprenant un vitrage (V), un joint (J) destiné à venir au contact dudit vitrage (V) et un encadrement (E) destiné à recevoir et à bloquer le joint (J), l'encadrement (E) comportant une ouverture destinée à recevoir ledit joint (J) dont le volume est supérieur à celui dudit joint (J) pour ménager un vide (1) sous le joint (J) une fois le joint disposé dans l'ouverture, le joint (J) étant creux (8) dans sa base destinée à être disposée dans l'ouverture de l'encadrement et comportant à son extrémité libre opposée à ladite base une zone centrale évidée en forme de U pour venir épouser, enserrer et bloquer la périphérie dudit vitrage (V), et l'ouverture de l'encadrement (E) et le joint (J) possédant chacun un profil complémentaire pour que le joint (J) puisse s'enchâsser et se bloquer dans l'ouverture, **caractérisé en ce que** :
- l'encadrement (E) possède au moins une première paroi latérale débordante (2) dont l'extrémité est pourvue d'un ergot (3), une paroi (4) disposée à distance de l'ergot d'extrémité, s'étendant orthogonalement à la paroi latérale (2) du même côté de la paroi que ledit ergot (3) et portant une seconde paroi latérale (5) en vis-à-vis de la première paroi latérale (2), ladite seconde paroi latérale (5) portant une paroi oblique (6) inclinée vers la première paroi latérale (2), ladite paroi oblique (6) comportant un bossage (7), la disposition des parois formant ladite ouverture destinée à recevoir et bloquer ledit joint (J), et
- ladite zone centrale évidée en forme de U comporte au moins une aile interne (9) et une aile externe (10) destinées à venir encadrer la périphérie dudit vitrage (V), ledit joint (J) comportant à sa base, sur sa face correspondant à l'aile externe (10), une gorge (11) destinée à coopérer avec l'ergot (3) de l'encadrement (E) et, sur sa face correspondant à l'aile interne (9), un talon (12) destiné à coopérer avec le bossage (7) de l'ouverture de l'encadrement (E).

2. Dispositif selon la revendication 1, **caractérisé en ce que** le joint (J) comporte de plus, du côté extérieur de l'aile externe (10), une saignée (13) pratiquée sur toute la longueur dudit joint (J) disposée à distance de ladite gorge (11).

3. Dispositif selon la revendication 2, **caractérisé en ce que** ladite ouverture de l'encadrement (E) est prévue pour recevoir le joint (J) dans sa position normale et dans une position plus enfoncée où la saignée (13) du joint (J) se loge sur l'ergot (3) dans l'encadrement (E).

4. Dispositif selon l'une quelconque des revendications 1 à 3, **caractérisé en ce que** ledit joint (J) est réalisé en un élastomère extrudé.

5. Dispositif selon la revendication 4, **caractérisé en ce que** ledit élastomère extrudé est choisi parmi l'EPDM, le polychloroprène ou le silicone.

6. Dispositif selon l'une quelconque des revendications 1 à 4, **caractérisé en ce que** ledit encadrement (E) est un profilé en aluminium.

7. Procédé pour monter un vitrage (V) sur une ouverture de véhicule de transport de passagers utilisant le dispositif selon l'une quelconque des revendications 1 à 6, **caractérisé en ce que** :
- on dispose le vitrage (V) dans la zone centrale évidée en forme de U correspondant dudit joint (J), ledit joint (J) étant positionné sur toute la périphérie dudit vitrage,
- on enduit d'un produit glissant le joint (J) et/ou ledit encadrement (E),
- on positionne l'ensemble formé par ledit joint (J) et ledit vitrage (V) face à l'ouverture de l'encadrement (E),
- on exerce une pression sur ledit ensemble de manière à écraser le joint (J) par déformation du creux (8) de manière à pouvoir permettre le passage du joint (J) dans l'ouverture de l'encadrement (E) jusqu'à la mise en place du joint (J) dans l'ouverture de l'encadrement (E), et
- on vérifie le positionnement de l'ensemble joint (J) / vitrage (V) dans l'ouverture.

8. Procédé selon la revendication 7, **caractérisé en ce que** le produit glissant est de l'eau savonneuse.

9. Procédé pour démonter un vitrage sur une ouverture de véhicule de transport de passager utilisant le dispositif selon l'une quelconque des revendications 1 à 6, **caractérisé en ce que**
- on ouvre vers l'extérieur le U de la zone centrale dudit joint en enfonçant le joint (J) vers l'intérieur de l'encadrement (E), et
- on retire le vitrage (V) progressivement tout autour de l'ouverture.

10. Procédé selon la revendication 9, **caractérisé en ce qu'**il comprend de plus le retrait, si nécessaire, dudit joint (J).

11. Procédé selon l'une des revendications 9 ou 10, **caractérisé en ce que** l'ouverture de la zone centrale dudit joint (J) est obtenue en faisant basculer l'aile externe (10) dudit joint (J).

12. Procédé selon la revendication 11, **caractérisé en ce que** le basculement de l'aile externe (10) dudit joint (J) est obtenu en disposant dans la saignée (13) dudit joint (J) une spatule (S) sur laquelle on frappe, par exemple à l'aide d'un maillet (M), l'opération étant répétée sur au moins 75 % de la périphérie dudit joint (J).

## Claims

1. A device for fixing glass panes in passenger vehicles, comprising a glass pane (V), a joint (J) intended to come into contact with said glass pane (V), and a frame (E) intended to accommodate and hold the joint (J) in place, wherein the frame (E) comprises an opening intended to accommodate said joint (J), with the volume of said opening being higher than that of said joint (J) so as to provide a space (1) under the joint (J) once the joint is fitted in the opening, the joint (J) has a cavity (8) in its base, intended to be fitted in the opening in the frame, and comprises, at its free end opposite said base, a central, U-shaped hollow region for engaging with, clasping and locking the periphery of said glass pane (V), and the opening in the frame (E) and the joint (J) each have mating profiles such that the joint (J) can fit exactly and lock into the opening, **characterised in that:**
- the frame (E) has at least one first protruding side wall (2) the end of which is provided with a lug (3), a wall (4) at a distance from the end lug, extending orthogonally to the side wall (2), on the same side of the wall as said lug (3), and bearing a second side wall (5) facing the first side wall (2), with said second side wall (5) bearing an oblique wall (6) inclined towards the first side wall (2), said oblique wall (6) comprising a boss (7), wherein the arrangement of the walls forms said opening intended to accommodate and hold said joint (J) in place; and
- said central U-shaped hollow region comprises at least one inner wing (9) and one outer wing (10) intended to surround the periphery of said glass pane (V), with said joint (J) comprising, at its base, on the face corresponding to the outer wing (10), an undercut (11) intended to engage with the lug (3) in the frame (E) and, on the face corresponding to the inner wing (9), a bead (12) intended to engage with the boss (7) of the opening in the frame (E).

2. The device according to claim 1, **characterised in that** the joint (J) further comprises, on the outer side of the outer wing (10), a groove (13) extending along the full length of said joint (J), at a distance from said undercut (11).

3. The device according to claim 2, **characterised in that** said opening in the frame (E) is designed to accommodate the joint (J) both in its normal position and in a more depressed position in which the groove (13) in the joint (J) engages with the lug (3) in the frame (E).

4. The device according to any one of claims 1-3, **characterised in that** said joint (J) is made from extruded elastomer.

5. The device according to claim 4, **characterised in that** said extruded elastomer is selected from EPDM, polychloroprene or silicone.

6. The device according to any one of claims 1-4, **characterised in that** said frame (E) is an aluminium profile.

7. A method for fitting a glass pane (V) in an opening in a passenger vehicle using the device according to any one of claims 1-6, **characterised in that**:
- the glass pane (V) is fitted in the corresponding central U-shaped hollow region in said joint (J), with said joint (J) being positioned over the whole periphery of said glass pane;
- a lubricant is applied to said joint (J) and/or frame (E);
- the assembly comprised of said joint (J) and said glass pane (V) is positioned against the opening in the frame (E);
- pressure is exerted on said assembly so as to crush the joint (J) by deformation of the cavity (8) and allow the joint (J) to enter the opening in the frame (E) until the joint (J) is seated in the opening in the frame (E); and
- the positioning of the joint (J)-glass pane (V) assembly in the opening is checked.

8. The method according to claim 7, **characterised in that** the lubricant is soapy water.

9. A method for removing a glass pane from an opening in a passenger vehicle using the device according to any one of claims 1-6, **characterised in that**:
- the U of the central region in said joint is opened outwards by pushing the joint (J) into the frame (E); and
- the glass pane (V) is progressively pulled out all round the opening.

10. The method according to claim 9, **characterised in that** it further includes, if necessary, the step of removing said joint (J).

11. The method according to one of claims 9-10, **characterised in that** the step of opening the central region in said joint (J) is achieved by tipping the outer wing (10) of said joint (J).

12. The method according to claim 11, **characterised in that** the step of tipping the outer wing (10) of said joint (J) is achieved by inserting a spatula (S) into the groove (13) in said joint (J) and by striking said spatula (S) using, for example, a mallet (M), wherein this operation is repeated around at least 75% of the periphery of said joint (J).

## Patentansprüche

1. Vorrichtung zur Befestigung von Glasscheiben an Personentransportfahrzeugen, mit einer Glasscheibe (V), einer Dichtung (J) zur Anlage an der Glasscheibe (V), und einem Rahmen (E) zum Aufnehmen und Festklemmen der Dichtung (J), wobei der Rahmen (E) eine Öffnung zum Aufnehmen der Dichtung (J) aufweist, deren Volumen größer als dasjenige der Dichtung (J) ist, um bei eingesetzter Glasscheibe (V) einen Hohlraum (1) zu bilden, wobei die Dichtung (J) in ihrer zur Anordnung in der Öffnung des Rahmens vorgesehenen Basis hohl (8) ist und an ihrem der Basis gegenüberliegenden freien Ende einen U-förmigen ausgenommenen Mittelbereich aufweist, um sich an den Umfangsrand der Glasscheibe (V) anzulegen, diesen zu umschließen und festzuklemmen, und wobei die Öffnung des Rahmens (E) und die Dichtung (J) jeweils ein komplementäres Profil aufweisen, so dass die Dichtung (J) in die Öffnung einsetzbar und festklemmbar ist, **dadurch gekennzeichnet, dass**
- der Rahmen (E) mindestens eine erste überstehende Seitenwand (2) aufweist, deren Ende mit einem Vorsprung (3) versehen ist, wobei eine von dem Endvorsprung beabstandet angeordnete Wand (4) sich auf der gleichen Seite der Wand wie der Endvorsprung (3) orthogonal zur Seitenwand (2) erstreckt und eine der ersten Seitenwand (2) gegenüberliegende zweite Seitenwand (5) trägt, wobei die zweite Seitenwand (5) eine zu der ersten Seitenwand (2) hin geneigte schräge Wand (6) trägt, wobei die schräge Wand (6) einen Vorsprung (7) aufweist, wobei die Anordnung der Wände die zum Aufnehmen und Festklemmen der Dichtung (J) vorgesehene Öffnung bildet, und
- der U-förmige ausgenommene Mittelbereich mindestens einen inneren Flügel (9) und einen äußeren Flügel (10) aufweist, welche zum Einfassen des Umfangsrandes der Glasscheibe (V) vorgesehen sind, wobei die Dichtung (J) an ihrer Basis auf ihrer dem äußeren Flügel (10) entsprechenden Fläche eine Nut (11) zum Zusammenwirken mit dem Vorsprung (3) des Rahmens (E) und auf ihrer dem inneren Flügel (9) entsprechenden Fläche einen Ansatz (12) zum Zusammenwirken mit dem Vorsprung (7) der Öffnung des Rahmens (E) aufweist.

2. Vorrichtung nach Anspruch 1, **dadurch gekennzeichnet, dass** die Dichtung (J) ferner auf der Außenseite des äußeren Flügels (10) eine über die gesamte Länge der Dichtung (J) ausgebildete und von der Nut (11) beabstandet angeordnete Rille (13) aufweist.

3. Vorrichtung nach Anspruch 2, **dadurch gekennzeichnet, dass** die Öffnung des Rahmens (E) vorgesehen ist, um die Dichtung (J) in ihrer Normalposition und in einer weiter versenkten Position, in welcher die Rille (13) der Dichtung (J) auf dem Vorsprung (3) in dem Rahmen (E) sitzt.

4. Vorrichtung nach einem der Ansprüche 1 bis 3, **dadurch gekennzeichnet, dass** die Dichtung (J) aus einem extrudierten Elastomer gebildet ist.

5. Vorrichtung nach Anspruch 4, **dadurch gekennzeichnet, dass** das extrudierte Elastomer unter EPDM, Polychloropren oder Silikon gewählt ist.

6. Vorrichtung nach einem der Ansprüche 1 bis 4, **dadurch gekennzeichnet, dass** der Rahmen (E) ein Aluminiumprofil ist.

7. Verfahren zum Montieren einer Glasscheibe (V) in einer Öffnung eines Personentransportfahrzeugs unter Verwendung der Vorrichtung nach einem der Ansprüche 1-6, **dadurch gekennzeichnet, dass:**
- die Glasscheibe (V) in dem entsprechenden U-förmigen ausgenommenen Mittelbereich der Dichtung (J) angeordnet wird, wobei die Dichtung (J) entlang des gesamten Umfangsrandes der Glasscheibe positioniert wird,
- die Dichtung (J) und/oder der Rahmen (E) mit einem Gleitmittel bestrichen wird,
- die durch die Dichtung (J) und die Glasscheibe (V) gebildete Einheit der Öffnung des Rahmens (E) zugewandt positioniert wird,
- ein Druck auf die Einheit aufgebracht wird, so dass die Dichtung (J) durch Verformung des Hohlraums (8) zusammengedrückt wird, um das Einführen der Dichtung (J) in die Öffnung des Rahmens (E) bis zum Platzieren der Dichtung (J) in der Öffnung des Rahmens (E) zu ermöglichen, und
- die Positionierung der Einheit von Dichtung (J) und Glasscheibe (V) in der Öffnung geprüft wird.

8. Verfahren nach Anspruch 7, **dadurch gekennzeichnet, dass** das Gleitmittel Seifenwasser ist.

9. Verfahren zum Demontieren einer Glasscheibe in einer Öffnung eines Personentransportfahrzeugs unter Verwendung der Vorrichtung nach einem der Ansprüche 1 bis 6, **dadurch gekennzeichnet, dass**
- das U des Mittelbereichs der Dichtung nach außen hin geöffnet wird, indem die Dichtung (J) in das Innere des Rahmens (E) gedrückt wird, und
- die Glasscheibe (V) fortschreitend rund um die gesamte Öffnung herausgezogen wird.

10. Verfahren nach Anspruch 9, **dadurch gekennzeichnet, dass** es ferner gegebenenfalls das Herausziehen der Dichtung (J) aufweist.

11. Verfahren nach einem der Ansprüche 9 oder 10, **dadurch gekennzeichnet, dass** das Öffnen des Mittelbereichs der Dichtung (J) erreicht wird, indem der äußere Flügel (10) der Dichtung (J) gekippt wird.

12. Verfahren nach Anspruch 11, **dadurch gekennzeichnet, dass** das Kippen des äußeren Flügels (10) der Dichtung (J) erreicht wird, indem in die Rille (13) der Dichtung (J) ein Spachtel (5) angeordnet wird, auf welchen beispielsweise mit einem Hammer (M) geschlagen wird, wobei der Vorgang über mindestens 75% des Umfangs der Dichtung (J) wiederholt wird.
